# EUROPEAN PATENT APPLICATION

(11) **EP 2 993 762 A1**
(43) Date of publication of application: **09.03.2016**
(21) Application number: 14183106.5
(22) Date of filing: 02.09.2014
(51) Int. Cl.: H02K 1/32, H02K 9/06, H02K 1/24

(54) **Rotor assembly of electric machine**

(71) Applicant: ABB Technology AG, 8050 Zürich (CH)
(72) Inventor: KOLEHMAINEN, Jere, 65320 Vaasa (FI); IKÄHEIMO, Jouni, 65320 VAASA (FI); HEIKFOLK, Kari, 65320 VAASA (FI)
(74) Representative: Kinnunen, Kari Tapio

(57) **Abstract**

A rotor assembly of an electric machine, comprising an air channel (314, 814, 1146) for allowing cooling air to pass through the rotor assembly in longitudinal direction of the rotor assembly. The rotor assembly comprises a guiding member (314A, 850, 1112A) at an end of the rotor assembly for guiding cooling air to or from the air channel when the rotor assembly is being rotated.

## Description

### FIELD

The present invention relates to electric machines and specifically to cooling of the electric machine.

### BACKGROUND

A rotor assembly of an electric machine typically comprises a rotor constructed of a stack of rotor sheets, a shaft inserted through the rotor, and so called end plates at the ends of the rotor. The end plates serve, for instance, in keeping a stack of sheets in place when the shaft is inserted to the stack of sheets, and when the rotor is being rotary cut.

Rotor sheets may be constructed as having alternating flux paths and flux barriers. When the rotor sheets are aligned and stacked, the flux barriers form air channels through the rotor in axial direction. End plates are provided with air openings, which together with the air channels of the rotor provide cooling channels for cooling of the rotor. In some implementations, a centrifugal blower is fixed to an end of the rotor to enhance air drift for cooling the stator and/or rotor of the machine.

Current solutions for cooling the machine are, however, insufficient, causing hot spots to the stator, especially at the end of the stator residing opposite to the end where the cooling air is taken into the machine. The power that can be taken out of the motor is typically determined by the hottest point within the machine. Thereby a hot spots leads to loss of power that is be taken out of the machine.

An improved solution for cooling to the electric machine is thus needed.

### SUMMARY

An object of the present invention is thus to provide an apparatus and a method so to alleviate the above disadvantages.

The objects of the invention are achieved by what is stated in the independent claims. The preferred embodiments of the invention are disclosed in the dependent claims.

By help of the invention, the temperature within the rotor and stator end windings can be balanced thereby reducing the development of hot spots. This allows taking more power of the machine. The need of an extra centrifugal blower can also be avoided.

### DRAWINGS

In the following the invention will be described in greater detail by means of embodiments with reference to the attached drawings, in which
Figure 1 shows a prior art end plate of an electric machine;
Figure 2 shows an embodiment of a rotor sheet;
Figure 3 shows an end of the rotor assembly seen from the direction that sets against the rotor;
Figure 4 shows an end of the rotor assembly seen from the side exterior of the rotor;
Figure 5 illustrates air circulation between two ends of the rotor assembly;
Figure 6A shows an embodiment of an end plate seen from the side that sets against the rotor;
Figure 6B shows an embodiment of an end plate seen from the side that sets exterior of the rotor;
Figure 7 shows an embodiment of opposite air flows within a pole;
Figure 8 highlights a further embodiment of an end of the rotor assembly seen from the side that sets exterior of the rotor;
Figure 9 highlights another embodiment of an end plate seen from the exterior of the rotor;
Figure 10 shows an embodiment of a rotor assembly; and
Figure 11 shows another view of an embodiment of a rotor assembly;
Figure 12 shows another view of an embodiment of a rotor assembly; and
Figure 13 shows an embodiment of a method.

### DESCRIPTION OF EMBODIMENTS

In the following, some embodiments of the invention are illustrated. The embodiments relate to rotor assemblies and are applicable to electric machines such as motors and generators.

In the embodiments, there are provided one or more cooling channels that extend through the rotor are at least substantially in axial direction, that is, parallel to the shaft receivable by the rotor. The rotor assembly comprises an even number of magnetic poles. Each pole is provided with one or more cooling channels.

The rotor assembly may comprise a rotor and separate end plates arranged to the ends of the rotor. The rotor may be stacked of a set of rotor sheets. Alternatively, the rotor assembly may be moulded to be a unitary piece.

In the embodiments, there are provided air guiding members at ends of the rotor assembly. The air guiding members may be inclinations in the ends of the cooling channels or projections arranged to the end of the rotor assembly. In an embodiment both inclinations and projections may be applied. The air guiding members being at the ends of the rotor assembly may be thus provided alternatively in the end plate or in the moulded rotor if no end plate is applied. Although the following embodiments disclose that the air guiding members, such as projections and/or inclinations are provided in the end plate, it is understood that they may alternatively be arranged to the rotor as well.

The air guiding members are arranged such that air flows in the cooling channels to opposite directions. There is a plurality of alternatives for how the opposing air flow can be arranged.

In one embodiment, the rotor comprises a plurality of poles and each pole has at least two adjacent cooling channels or cooling channel groups. For instance, in a synchronous reluctance machine the rotor may have flux barriers, where each flux barrier may be divided into portions by one or more bridges. The opposing air flow may be arranged to flux barrier portions on different sides of a bridge.

In one embodiment, the opposing air flow is arranged pole-wise so that in two neighbouring poles the air flows into opposing directions. Each pole may have one or more cooling channels.

In another embodiment, the poles may be grouped to groups of two or more poles, and the opposing air flow is arranged between the pole groups.

In a still further embodiment there may be a plurality of rotors, where the opposite air flow is arranged between neighbouring rotors.

The opposite air flow can be arranged pole-wise so that air flows in neighbouring poles to opposite directions. Alternatively the opposing air flow can be arranged air channel wise such that even two air channels of a single pole can be opposing air flows. In this way the temperature differences between the rotor and stator end windings can be balanced and more power can be taken out of the machine as the highest temperature, being the limiting factor, can be lowered.

When considering a four pole synchronous reluctance machine, at least the following alternatives exist for arranging the air flow.

In a first embodiment, the air flow in all the poles is similarly arranged. In each pole, air flows in neighbouring channels of each pole to opposing directions. If we denote one flow direction to be U (up) and the opposite direction to be D (down), the flow arrangement in a four-pole rotor having two channels per pole is thus UD-UD-UD-UD.

In another embodiment, the air flows in neighbouring poles are opposite to each other. The flow arrangement is thus UD-DU-UD-DU.

In still another embodiment the arrangement is UU-DD-UU-DD that is in both channels of pole the air flows into a certain direction and in the neighbouring pole the flow direction is opposite.

In a still further embodiment, the flow arrangement is UU-UU-DD-DD, that is two neighbouring poles have a similar air flow from a first end of the rotor to the second end, and in the two other poles the air flow is opposite.

In an embodiment, the electric machine is a synchronous reluctance machine. In a synchronous reluctance machine the rotor comprises alternating flux paths and barriers. The flux barriers are made by cutting openings to the electric sheet, which openings form the cooling channels through the rotor.

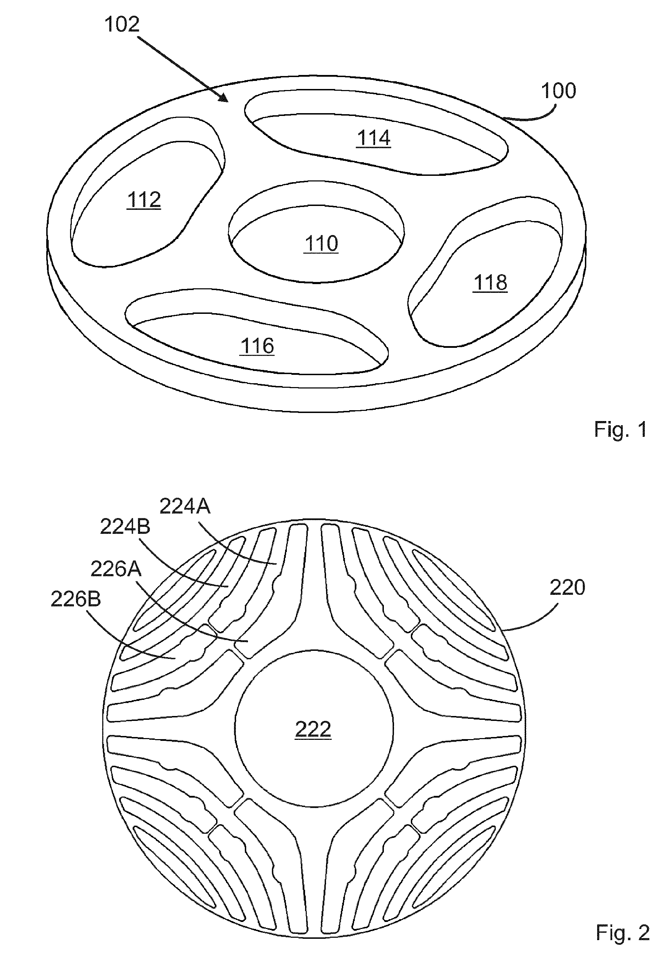

Figure 1 shows a prior art end plate 100 for a synchronous reluctance machine. The end plate is shown from the exterior side 102, which is the opposite side of the end plate than the side that is set against the rotor. Practically, however, the end plate 100 may symmetric such that the end plate looks similar from the exterior side 102 and the opposite inner side.

The end plate has a shaft hole 110 for receiving a shaft of the machine. The end may further have a plurality of cooling openings 112 to 118. The shown end plate has four cooling openings and is thus specifically suited for cooling a four pole rotor. The rotor may be a rotor of a synchronous reluctance machine having air channels extending through the rotor in axial direction.

Figure 2 shows an example of a four pole rotor sheet 220 of a synchronous reluctance machine. The sheet has a central shaft hole 222. Each pole has alternating flux paths 224A, 224B and flux barriers 226A, 226B between the flux paths. The flux paths make parabola-like curves and extend between two points on the circumference of the sheet. The flux barriers extend almost to the circumference but there is small amount of sheet material between the end of the flux barrier and circumference of the sheet. The flux barriers may be made as cut-outs to the electric steel sheet material by punching or by laser cutting, for instance.

The rotor is constructed by stacking a plurality of similar sheets to each other. When the sheets are aligned together, the flux barriers form cooling channels through the rotor, which cooling channels co-operate with the cooling openings of the end plate. Alternatively to stacking rotor sheets, the rotor may be constructed as integral by moulding.

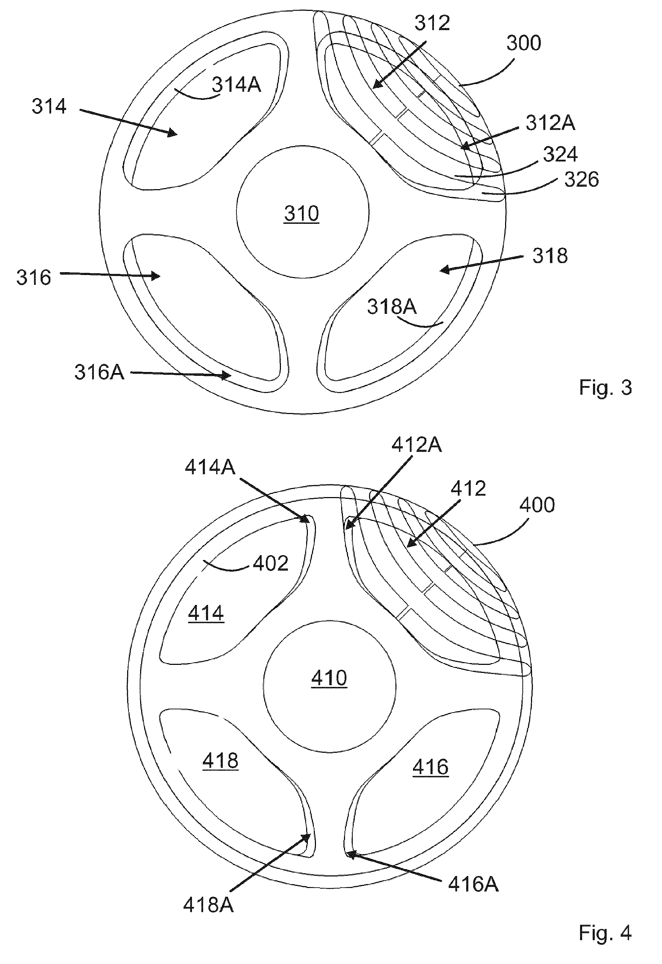

Figures 3 and 4 show embodiments of rotor assembly ends according to the invention. The rotor assembly end may be an end plate or an end of the moulded rotor. The end plate may have a thickness in axial (shaft) direction of 0,5 to 3 cm, for instance. In the case of the moulded rotor assembly, the end may be considered to have a substantially similar dimension.

In the following embodiments, reference is mainly made to end plates but it is understood that the rotor assembly may be a moulded structure where no end plate is needed.

Figure 3 shows the end plate 300 from the inner side 304, which sets against the rotor. Figure 4 shows the end plate from the outer side 402 that is the side opposite to the inner side of the end plate. Figures 3 and 4 may be considered to show two sides of the same end plate or sides of two different end plates.

The end plate 300 has a shaft hole 310 and four cooling openings 312 to 318 according to a four-pole rotor structure. At the cooling opening 312, Figure 3 also highlights the rotor sheet flux paths 324 and barriers 326. It can be seen that the cooling opening 312 of the end plate cover a great portion of the area of the flux barriers, whereby cooling of the rotor is maximized without compromising mechanical strength of the end plate.

As Figure 3 shows, the cooling openings 312 to 318 have inclined surfaces 312A, 314A, 316A and 318A that face towards the inner side 304 of the end plate 300. In the inclined surface, the end plate inner side 304 is closer to the end plate 300 outer circumference than the opposite exterior side of the end plate.

In an embodiment, every other cooling opening have similar inclinations. In Figure 3 there are only four openings, whereby the opposite openings 312 and 316 have mutually similar openings, and the other two openings 314 and 318 have mutually similar inclinations. In this way it can be arranged that air flows in neighbouring air channels to opposite directions.

The openings 314 to 318 shown in Figure 3 have a longitudinal shape. The longitudinal shape is not the only alternative, but the openings may alternatively be round, for instance. The openings have two ends in the circumferential direction of the end plate, where one of the ends precedes the other opening depending on the rotation direction of the end plate. For instance, when the end plate 300 rotates clockwise, the upper end of the opening 314 is the leading end/edge of the opening, and the lower end is the trailing end of the opening. When the end plate 300 of Figure 3 rotates counter-clockwise, the roles of the ends are opposite.

It can be seen that the inclinations in the openings 312 to 318 vary. For instance, in the opening 314 the upper end is inclined whereas the lower end may be straight, that is, the direction of the surface is parallel to the direction of the shaft opening. In the neighbouring opening 316, the lower end is inclined, and the upper end is straight.

When the end plate is rotated, the inclination grasps air to the rotor. That is, when the end plate 300 is rotated clockwise, the trailing edge in the openings 312 and 316 having inclination facing towards the rotor grasp air to the interior of the rotor. When the end plate is rotated counter-clockwise, the inclined trailing edge of the openings 314 and 318 grasp air to the respective openings 314 and 318.

Figure 4 shows an end plate 400 seen from the outside. The end plate of Figure 4 may be similar to end plate than that of Figure 3 but illustrated from different side. Alternatively, the end plates of Figures 3 and 4 may be different. The basic structure between the end plates of Figures 3 and 4, however, is similar. The end plate of Figure 4 also has a shaft hole 410 and four cooling openings 412 to 418 arranged around the shaft hole. When the end plates are mounted to the rotor assembly, the openings in the end plates are aligned to each other. The end plates may, however, be arranged in rotated position to each other.

Also in Figure 4 there are some inclinations in the openings denoted by 412A to 418A.

In Figures 3 and 4, the openings may be partly inclined towards the inner side of the end plate and/or direct being in axial direction of the rotor and/or partly inclined towards the outer side of the end plate. By way of an example, the opening 412 may be inclined by a small portion 412 towards the outer side of the end plate 400, whereas the rest of the opening 412 is parallel to the axial direction of the end plate. The same applies to all openings 412 to 418.

It may also be noticed that neighbouring openings are mirror images about an axis between the openings. That is, openings 312 and 314 are mirror images of each other about a vertical axis, and openings 314 and 316 are mirror images of each other about a horizontal axis.

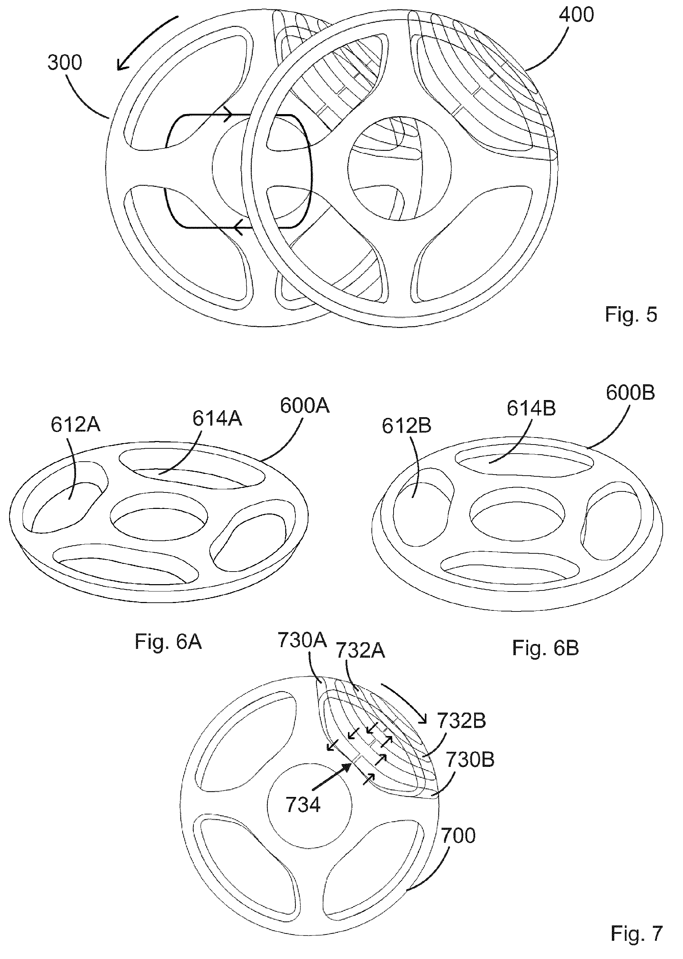

Figure 5 shows an embodiment, where the end plates of Figures 3 and 4 have been depicted overlapping each other such that a rotor is assumed to reside between the end plates. The end plate on the left corresponding to Figure 3 is thus shown from the inside, and the end plate on the right corresponding to Figure 4 from the outside. It is noted that the end plate of Figure 4 has been 90 degrees clock-wise rotated.

In Figure 5, there is shown a loop with arrows showing the flow of cooling air when the rotor assembly is rotated counter-clockwise. It can be seen that the openings on the left of each end plate form a loop where the air flows in one direction in the upper pair of openings, and to the opposite direction in the lower pair of openings. A similar loop of air flow occurs in the pair of openings on the right of the end plates.

The desired flow of air is achieved by arrangement of the inclinations in the openings. The left-top opening in the end plate 300 on the left has an inclination at the trailing edge facing the interior of the rotor, which causes the flow of air to the inside of the rotor. The left-top opening in the end plate on the right has an inclination facing exterior of the rotor, which alleviates the air flow out of the rotor. The left-bottom opening in the end plate on the right has again an inclination facing the interior of the rotor, which alleviates the flow of air back to the interior of the rotor again. The opening on the bottom-left in the end plate on the left has an inclination facing interior of the rotor, which alleviates flow of air out of the rotor.

In the shown way the temperature between the two air channels or two poles of the rotor is balanced as the air is arranged to flow between the two channels. Thereby the efficiency of the machine can be improved because formation of excess heat is balanced between two poles. The circulation of air between poles is a significant improvement over solutions where the air only flows in one direction through the rotor. In such solutions the first end close to the air entry end may stay cool but heat may be cumulated to the other end of the rotor.

Figures 6A and 6B show another embodiment of how the inclinations in the openings can be arranged. Figure 6A shows an end plate 600A seen from the direction of the interior of the rotor, and Figure 6B shows an end plate 600B seen from the exterior of the rotor. This embodiments shows a four-pole structure, but the number of poles may be some other even number such as 2, 6 or 8, for instance.

The end plates of Figures 6A and 6B are set in alignment to each other such that the opening 612A sets parallel to the opening 612B and the opening 614A sets parallel to the opening 614B.

The opening 612A is inclined such that the inclination faces the interior side of the end plate visible in Figure 6A. In the embodiment of Figure 6A the whole opening 612A is inclined such that the opening 612A grasps cooling air from the exterior of the rotor bot if the rotor is rotated clockwise or counter-clockwise.

The opening 612B has straight walls being parallel to the walls of the central shaft opening.

In the neighboring openings 614B and 614A the situation is inverse. The walls of the opening 614B are inclined towards the interior of the rotor whereas the walls of the parallel opening 614A are straight. Thereby air circulation between adjacent poles is achieved. In this way the temperature of the rotor can be balanced, which leads to balancing of the temperature of the stator thereby reducing the temperature of the eventual hotspots of the stator.

Figures 6A and 6B further show that also the outer edge of the end plate can be inclined such that the inclinations faces the exterior of the rotor. The purpose of this is to reduce eddy currents.

Figure 7 shows another embodiment, where opposite air flow is arranged between channels of a pole. The embodiment shows an end 700 of the rotor, which may be an end plate or a molded end of the rotor. The exemplified rotor has four poles and in the top-right pole the flux barriers and flux paths of the rotor are illustrated. In the figure it is assumed that the end plate is behind the rotor such that Figure 7 shows the situation seen from the interior of the rotor.

In the illustrated pole there are four flux barrier pairs in radial direction of the rotor. The flux barrier closest to the center of the rotor has two portions, 730A and 730B. The penultimate flux barrier when seen from the edge of the rotor has two portions 732A, 732B. Between the flux barrier portions of each flux barrier there is a bridge. That is, between the flux barrier portions 730A and 730B, which form the air channels through the rotor there is a bridge, that is rigid material. The bridge 734 prevents air flow between the two flux barrier portions 730A and 730B.

In Figure 7, when the rotor assembly is rotated clockwise, the trailing edge of the end of the rotor has an inclination toward the interior of the rotor, whereby it grasps air into the rotor as shown by the arrows on the flux barrier portions 730A, 732A on the left. On the cooling channels on the right, such as those having the flux barrier portions 730B and 732B, the air flows to the opposite direction. Thus, within a pole there are cooling channels having opposing air flow such as the channels 730A and 730B.

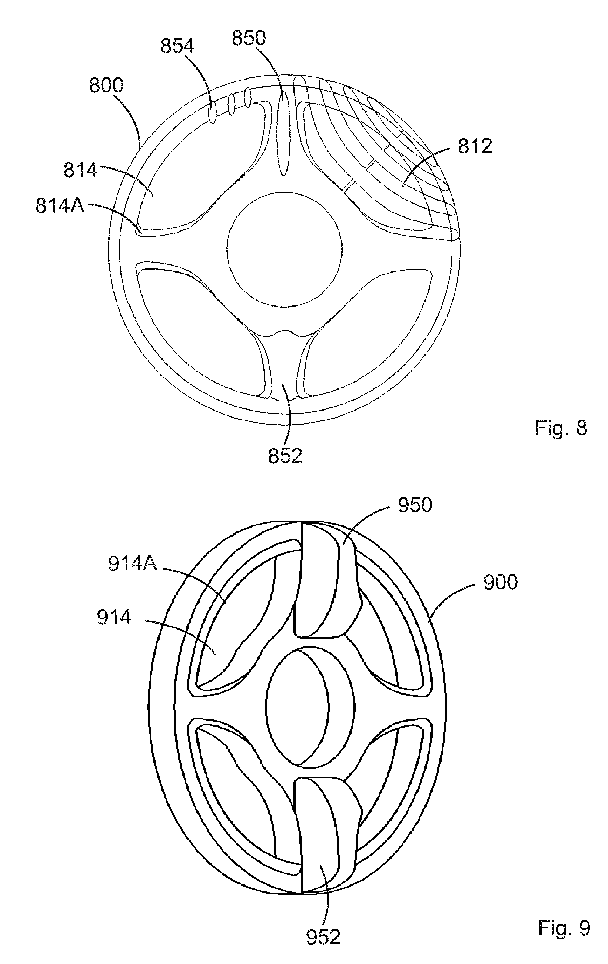

Figure 8 shows another embodiment where there are air guiding members in the form of projections 850 arranged to the end plate 800 as shown, or to the end of the rotor. The projections may be implemented by means of welding, for instance, or they may be formed to the rotor in the molding phase.

In an embodiment, there may be provided one or more projections 850 in the space between two openings 812, 814 of the end of the rotor. Figure 8 shows a first projection 850 and a second projection 852 opposite to the first projection and arranged between two other openings of the end plate. The projections may be mutually similar or different. When the end (plate) of Figure 8 is rotated counter-clockwise, the projection pushes air to the opening on the left of the projection, and when the end plate is rotated clockwise, the projection pushes air to the opening on the right of the projection.

Both end plates may have projections. The projections may be arranged such that they are mutually in different rotational position. If the projections in the first end plate are vertically arranged as in Figure 8, the projections in the second end plate may be arranged horizontally, that is 90 degrees rotated with respect to the projections 850 and 852. In this way air circulation is arranged such that air flows to opposite direction in two adjacent channels.

Figure 8 also shows additional projections 854 provided between the opening and the circumference of the end plate for guiding cooling air to the opening 814 next to the projections 854. There may be another set of projections opposite of the end plate to the projections 854. The other end plate may be provided with similar projections, which are arranged into a rotated position with respect to the shown projections.

In an embodiment, the projections/wings are arranged radially to the end plate. In another embodiment, the projections are arranged in an oblique orientation with respect to the radial direction.

The projections 850, 852 may be the only air guiding members of the end plate. Alternatively, the projections 854 may be the only air guiding members. Alternatively, the projections 850, 854 may be applied in combination. Furthermore, projections may be applied in an end (plate) together in combination with inclinations such as the inclination 814A in the opening 814. In still another embodiment, there may be provided a grid with non-inclined or inclined bars for guiding air to or from the opening. Further alternatively there may be provided one or more studs that project from the surface of the opening.

Figure 9 shows another embodiment of an end plate 900. The end plate has two projections 950, 952 arranged to the exterior surface of the end plate. The projections are arranged in radial direction. In an embodiment, they extend substantially from the shaft hole to the circumference of the end plate. The projection may have a projecting surface, which may be at least substantially perpendicularly the surface of the end plate. Alternatively, the projection may be slightly oblique facing the opening 914 to further alleviate the air flow to the opening. The end plate has also an opening 914 and an inclined surface in the opening 914A. The inclination faces towards the interior of the rotor. The inclination may be provided in at least a half of the opening. The rest of the walls of the opening may be straight.

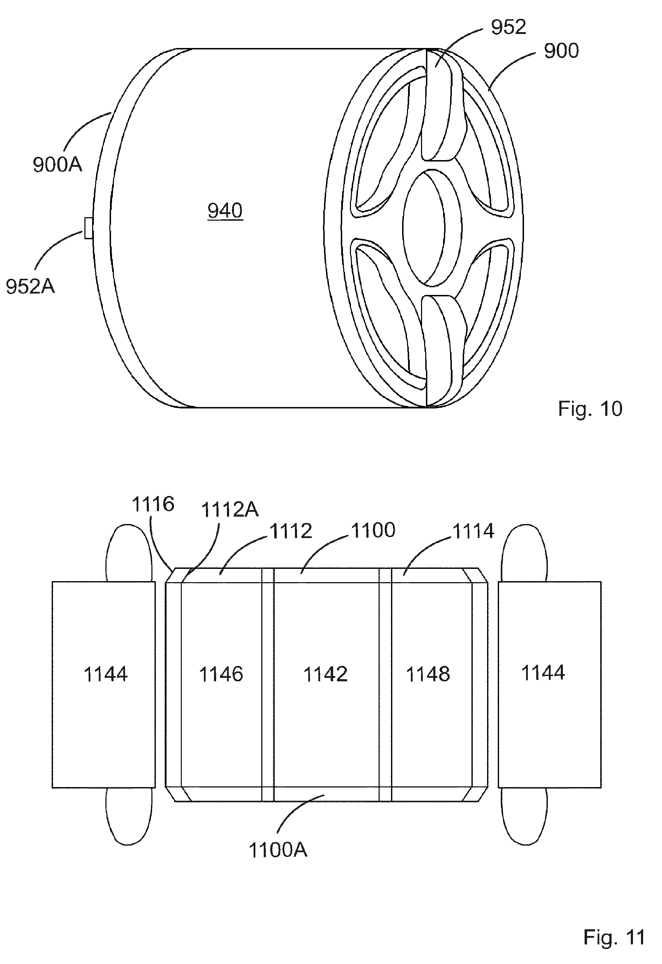

Figure 10 shows a rotor assembly where the end plate 900 of Figure 9 has been mounted to. There is a rotor 940 and two end plates 900 and 900A arranged to opposite ends of the rotor 940. It can be seen that the end plate 900A is 90 degrees rotated with respect to the end plate 900. In the end plate 900 the projections are vertically arranged, whereas in the end plate 900A they are horizontally arranged. Also the optional inclinations in the end plates are arranged such that air flows in opposite directions in adjacent cooling channels.

Figure 11 shows a view of an embodiment of an electric machine. In this view the machine has been flattened out such that two adjacent air channels 1146 and 1148 of the rotor assembly around the shaft 1142 and inside the stator 1144 are shown.

At both ends of the rotor there are end plates 1100 and 1100A. The end plate 1100 has a shaft opening, and two cooling openings 1112, 1114. It can be seen that the cooling opening 1112 has an inclined outer surface, and straight inner surface. The same applies to the other opening 1114, and the openings which are opposite to the openings 1112, 1114 in the other end plate. In all these openings, the inclination points towards the interior of the rotor.

Figure 11 shows also an inclined outer edge 1116 of the end plate. The purpose of this inclination is to increase the distance between the end plate and stator windings so that eddy currents can be decreased.

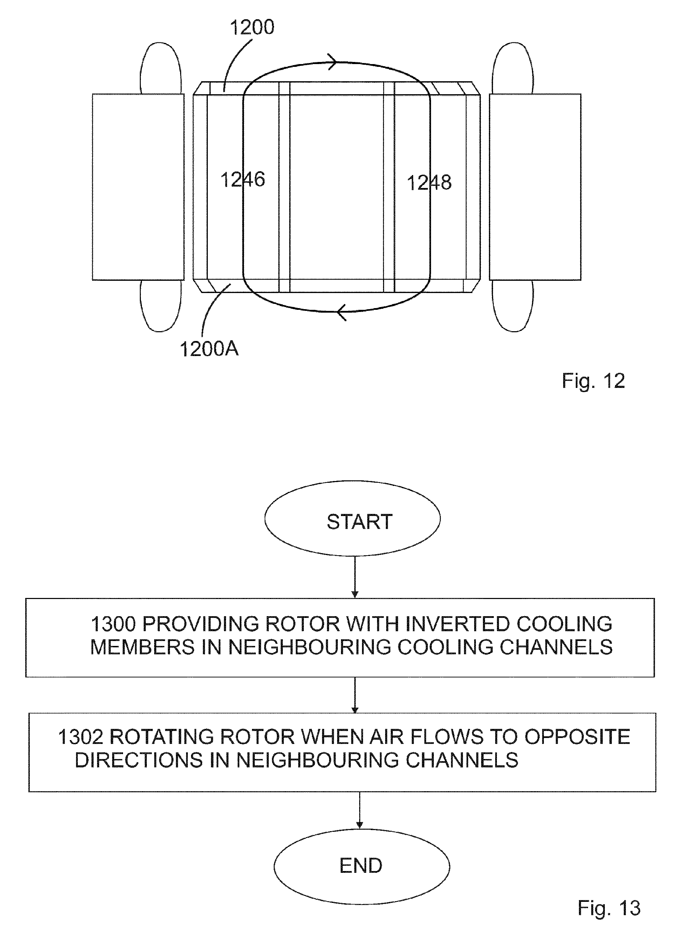

Figure 12 shows still another embodiment of an electric machine. This embodiment is mostly similar to the embodiment of Figure 11 but in this embodiment the end plates are differently inclined in association to the cooling channels. With respect to the cooling channel 1246, the first end plate 1200A has an inclination facing the interior of the rotor, whereas the second end plate 1200 has no inclination. In the adjacent cooling channel 1248, the situation is inverse, that is, the end plate 1200 has an inclined surface whereas the opening in the end plate 1200A has no inclination. When the embodiment of Figure 12 is rotated, the air circulates between the air channels 1246, 1248 as shown by the closed loop arrow.

Figure 13 shows an embodiment of a method. The rotor assembly is constructed 1300 such that air circulation between poles of the rotor is obtained. When the rotor is rotated 1302, the air flow to opposite directions in air channels of adjacent poles. Thus, air flows to a first direction in one or more air channels of a pole, and to an opposite direction in the remaining poles.

The end plate may be made of aluminium, aluminium bronze, aluminium alloy, iron or non-magnetic steel, for instance.

It will be obvious to a person skilled in the art that, as the technology advances, the inventive concept can be implemented in various ways. The invention and its embodiments are not limited to the examples described above but may vary within the scope of the claims.

## Claims

1. A rotor assembly of an electric machine, comprising:
an air channel (314, 814, 1146) for allowing cooling air to pass through the rotor assembly in longitudinal direction of the rotor assembly, **characterized in that** the rotor assembly comprises a guiding member (314A, 850, 1112A) at an end of the rotor assembly for guiding cooling air to or from the air channel when the rotor assembly is being rotated.

2. A rotor assembly according to claim 1, **characterized in that** the rotor assembly comprises at least two air channels (314, 316) and at least one guiding member (314A, 316A) associated with each air channel, and the guiding members are arranged to cause air to flow in opposite directions in the two air channels.

3. A rotor assembly according to any preceding claim, **characterized in that** the two air channels where opposing air flow is arranged are in at least one of a single pole, two poles, two pole groups and two rotors.

4. A rotor assembly according to any preceding claim, **characterized in that** the guiding member is comprised by an end plate (300, 400) arranged to an end of the rotor assembly, or by an end of the rotor assembly formed by molding to a uniform rotor assembly that comprises the guiding member.

5. A rotor assembly according to any preceding claim, **characterized in that** the guiding member comprises at least one of an inclination (314A) and a projection at an end of the rotor assembly.

6. A rotor assembly according to any preceding claim, **characterized in that** the guiding member (314A) comprises a projection arranged between two air channels such that when the rotor assembly is rotated into a first direction, the projection is arranged to guide air into a first air channel (314) on a first side of the projection, and when the rotor assembly is rotated into a second direction opposite to the first direction, the projection is arranged to guide air to a second air channel on the other side of the projection than the first air channel.

7. A rotor assembly according to any preceding claim, **characterized in that** the guiding member comprises, at the first end of the rotor assembly, a first projection (950) arranged between two air channels and a second projection (952) opposite to the first projection arranged between two other air channels, and the guiding member comprises at the second end of the rotor assembly third and fourth projections opposite to each other and each arranged between two air channels, which projections at the first end and the second end are arranged in different orientation to each other.

8. A rotor assembly according to any preceding claim, **characterized in that** the guiding member comprises one or more projections (854) arranged between the air channel and the outer circumference of the end of the rotor assembly.

9. A rotor assembly according to any preceding claim, **characterized in that** the rotor assembly comprises at a first end a first set of guiding members (952) and at a second end a second set of guiding members (952A), and the second set of guiding members is at least one magnetic pole distance rotated when compared to an orientation of the first set of guiding members.

10. A rotor assembly according to any preceding claim, **characterized in that** the guiding members (314A, 316A) associated with neighbouring air channels are, at an end of the rotor assembly, configured to convey air to opposite directions when the rotor being rotated.

11. A rotor assembly according to any preceding claim, **characterized in that** the rotor assembly comprises a rotor (940) and end plates (900, 900A) arranged to both ends of the rotor, which end plates are mutually similar but are arranged to a flipped and rotated position with respect to each other.

12. A rotor assembly according to any preceding claim, **characterized in that** the air channel has mutually different inclinations (312A, 412A) at ends of the air channel (312, 412).

13. A rotor assembly according to any preceding claim, **characterized in that** the rotor assembly comprises a first end plate (300) having a first opening (312) inclined according to a first type of inclination (312A), and a second opening (314) inclined according to a second type of inclination (314A), and a second end plate (400) having a first opening (414) inclined according to a first type of inclination (414A) and second opening (412) inclined according to a second type of inclination (412A), and the first end plate and second end plate are assembled in such a way that the first opening of the first end plate and the second opening of the second plate are arranged at opposite ends of a same air channel of the rotor, and a second opening of the first end plate and a first opening of the second end plate are arranged at opposite ends of the same air channel of the rotor.

14. A rotor assembly according to any preceding claim, **characterized in that** the rotor assembly is a synchronous reluctance machine rotor assembly having a rotor, which rotor comprises alternating flux paths for conducting a magnetic flux in the rotor, and flux barriers for preventing conduction of magnetic flux, wherein the flux barriers are formed by the openings extending parallel to the shaft in the rotor.

15. A method of cooling a rotor assembly of an electric machine having air channels extending through the rotor assembly in an axial direction of the rotor assembly, **characterized in that** the rotor assembly is provided with air guiding members in each end of the rotor assembly such that air is circulated to opposing directions in two neighbouring air channels.
